**Europäisches Patentamt**

**European Patent Office**

**Office européen des brevets**

(19)

(11) **EP 1 154 508 A2**

(12) ## EUROPEAN PATENT APPLICATION

(43) Date of publication:
**14.11.2001 Bulletin 2001/46**

(51) Int Cl.$^7$: **H01M 10/40**, H01M 2/16

(21) Application number: **01110976.6**

(22) Date of filing: **07.05.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **08.05.2000 JP 2000135104**

(71) Applicant: **MATSUSHITA ELECTRIC INDUSTRIAL
CO., LTD.
Kadoma-shi, Osaka 571-8501 (JP)**

(72) Inventors:
• **Morigaki, Kenichi
Nishinomiya-shi, Hyogo 663-8024 (JP)**

• **Murata, Toshihide
Izumiotsu-shi, Osaka 595-0072 (JP)**
• **Shibano, Yasuyuki
Sakai-shi, Osaka 599-8273 (JP)**
• **Eda, Nobuo
Hirakata-shi, Osaka 573-0106 (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **Lithium polymer secondary battery**

(57)   To obtain highly reliable lithium polymer secondary batteries with charge/discharge cycle characteristics equivalent to those of lithium ion secondary batteries, 70 to 90% of the total void volume of an electrode group formed by laminating the positive electrode, negative electrode and separator is filled with a nonaqueous electrolyte.

FIG. 1

**Description**

BACKGROUND OF THE INVENTION

The present invention relates to lithium polymer secondary batteries comprising an electrode group formed by laminating a positive electrode made of a lithium-containing composite oxide, a negative electrode made of a material capable of reversibly absorbing and desorbing lithium, and a separator containing an inorganic or organic filler; and a polymer electrolyte made of a nonaqueous electrolyte and a polymer material contained in the positive electrode, negative electrode and separator.

Lithium polymer secondary batteries comprising a positive electrode made of a lithium-containing composite oxide, a negative electrode made of a material capable of reversibly absorbing and desorbing lithium, and a nonaqueous electrolyte have a high energy density and excellent low-temperature characteristics. Moreover, the lithium polymer secondary batteries excel in the safety aspect because metal lithium is not used for their negative electrodes, and practical application of such batteries has being made possible rapidly. Further, as a thin, lightweight new battery, development of a lithium polymer secondary battery using a polymer material in the state of gel retaining a nonaqueous electrolyte (gelled polymer) has being carried out.

Since the polymer material has high affinity with respect to the nonaqueous electrolyte, it tends to swell excessively in the nonaqueous electrolyte during movement of the nonaqueous electrolyte upon charge and discharge reactions. As a result, electrode plates containing the polymer material swell, the electrical contact between the active material particles and between the active material particles and conductive particles is reduced, the ratio of particles which are not involved in the charge and discharge reactions increases, and the battery capacity is decreased. Therefore, as compared with lithium ion secondary batteries, lithium polymer secondary batteries have the problem of low charge/discharge cycle characteristics.

Then, as the polymer material that swells appropriately, various polymer materials have been proposed so far. These polymer materials, however, have unsatisfactory points, and lithium polymer secondary batteries having sufficient charge/discharge cycles have not yet been obtained.

For example, ethylene oxide based polymers having excellent compatibility with an nonaqueous electrolyte are proposed by M. Armand et al. in the specification of U.S. Patent No. 4,303,748, etc., but they have insufficient heat stability.

Moreover, acrylonitrile based polymers exhibiting flame resistance and high ion conductivity are proposed in Japanese Unexamined Patent Publication No. Hei 4-306560, etc., but there are limited nonaqueous electrolytes that have compatibility with these polymers, and the heat stability of these polymers is insufficient.

In addition, flame-resistive, electrochemically stable vinylidene fluoride based polymers are proposed by A. Gozdz et al. in the specification of U.S. Patent No. 5,296,318, etc., but there is a problem that the electrolyte phase is easily separated from the polymer at high temperatures.

Furthermore, acrylate based polymers which excel in retaining the nonaqueous electrolyte are proposed in Japanese Examined Patent Publication No. Sho 58-36828, etc., but there is a problem that these polymers are electrochemically unstable.

Accordingly, an object of the present invention is to solve the problem of poor charge/discharge cycle characteristics of lithium polymer secondary batteries and to provide highly reliable lithium polymer secondary batteries.

BRIEF SUMMARY OF THE INVENTION

The present invention relates to a lithium polymer secondary battery which comprises an electrode group formed by laminating a positive electrode made of a lithium-containing composite oxide, a negative electrode made of a material capable of reversibly absorbing and desorbing lithium, and a separator containing an inorganic or organic filler; and a polymer electrolyte made of a nonaqueous electrolyte and a polymer material contained in the positive electrode, negative electrode and separator; and which is characterized in that 70 to 90% of the total void volume of the electrode group is filled with the nonaqueous electrolyte.

The polymer material is preferably polyvinylidene fluoride or a copolymer having vinylidene fluoride unit.

Moreover, the polymer material is also preferably a polymer of monomer unit having an acrylate group or methacrylate group at a terminal end of a polyalkylene oxide group, or a copolymer having the above monomer unit.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

FIG. 1 is a cross sectional view of a lithium polymer secondary battery of the present invention.

FIG. 2 is a graph showing the relation between the ratio of the void volume of an electrode group filled with a nonaqueous electrolyte and the capacity maintenance rate of a lithium polymer secondary battery produced in Example 1.

FIG. 3 is a graph showing the relation between the ratio of the void volume of an electrode group filled with a nonaqueous electrolyte and the capacity maintenance rate of a lithium polymer secondary battery produced in Example 2.

DETAILED DESCRIPTION OF THE INVENTION

The present invention noted the amount of a nonaqueous electrolyte contained in the respective components of the lithium polymer secondary batteries, and improved the charge/discharge cycle characteristics of the lithium polymer secondary batteries by optimizing the amount of the nonaqueous electrolyte. In other words, by limiting the nonaqueous electrolyte amount in the respective components within a certain range, localization of the nonaqueous electrolyte and a change in the electrode plate volume due to movement of the nonaqueous electrolyte upon charge and discharge reactions are suppressed.

A lithium polymer secondary battery of the present invention comprises an electrode group formed by laminating a positive electrode made of a lithium-containing composite oxide, a negative electrode made of a material capable of reversibly absorbing and desorbing lithium, and a separator containing an inorganic or organic filler. Further, all of the positive electrode, negative electrode and separator contain the same kind of polymer material, and the polymer material swells with the nonaqueous electrolyte and is in the state of gel.

In order to swell the polymer material with the nonaqueous electrolyte, for example, the electrode group is stored in a battery case, and then the nonaqueous electrolyte is poured into the case. When the nonaqueous electrolyte is poured into the case, the nonaqueous electrolyte enters the voids (pores) of the electrode group and the polymer material swells.

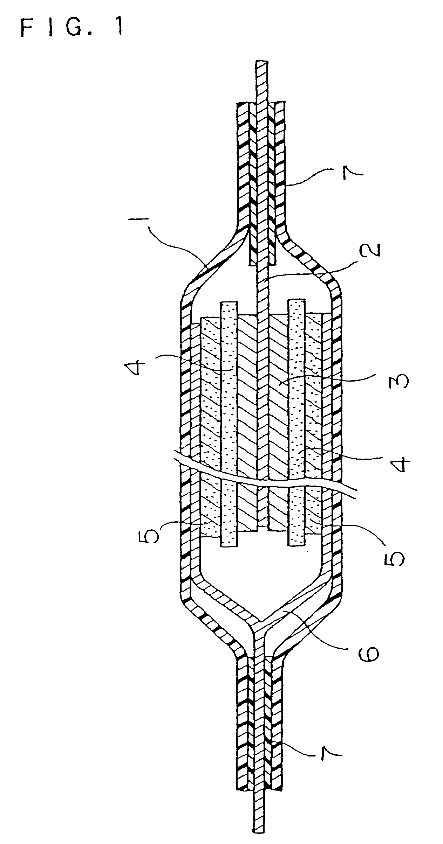

Here, FIG. 1 is a cross sectional view of a flat type lithium polymer secondary battery as one example of lithium polymer secondary battery of the present invention. With reference to FIG. 1, the following description will explain the lithium polymer secondary battery of the present invention.

First, the abstract of the battery shown in FIG. 1 will be explained. In FIG. 1, the electrode group is stored in a battery case 1 made of an aluminum/resin laminate film. The electrode group shown here is a unit cell produced by laminating one piece of each positive electrode plate 5 and separator layer 4 on both sides of a negative electrode plate 3 in such a manner that the positive electrode plate 5 and the separator layer 4 sandwich the negative electrode plate 3. In the present invention, however, the number of unit cells is not limited. An aluminum positive electrode lead 6 and a copper negative electrode lead 2 are connected to the positive electrode plate 5 and negative electrode plate 3, respectively, and the ends of the respective leads are drawn out of the battery case 1 from the heat welded portions (sealed portions) 7 so as to prevent contact between the leads.

In this lithium polymer secondary battery, after storing the electrode group in the battery case 1 and pouring a specified amount of nonaqueous electrolyte into the battery case 1, the heat welded portions 7 are formed at the opening portions of the battery case holding the respective leads so as to seal the lithium polymer secondary battery.

A characteristic feature of the present invention is to limit the amount of the nonaqueous electrolyte poured at this time within a certain range. In other words, the nonaqueous electrolyte is poured so that 70 to 90% of the total void volume of the electrode group is filled with the nonaqueous electrolyte. By filling 70 to 90% of the total void volume of the electrode group with the nonaqueous electrolyte, the charge/discharge cycle characteristic of the lithium polymer secondary battery is significantly improved. Moreover, in order to obtain an especially excellent charge/discharge cycle characteristic, it is preferred to fill 75 to 85% of the total void volume of the electrode group with the nonaqueous electrolyte. When the ratio of the void volume in the electrode group filled with the nonaqueous electrolyte is less than 70% of the total void volume, the discharge capacity of the battery is insufficient. On the other hand, when the ratio is more than 90%, the nonaqueous electrolyte moves and is localized upon charge and discharge reactions and the electrode plates swell, resulting in a broken electron conductive network and a lower battery capacity.

The total void volume of the electrode group is measurable by a mercury porosimeter. At this time, the positive electrode, negative electrode and separator constituting the electrode group may be separately subjected to mercury porosimetry measurement, and the total void volume of the electrode group may be calculated from the sum of the void volumes of the respective components.

Here, the electrode group is obtained by sequentially laminating the positive electrode, negative electrode and separator and uniting them by heat-press. Therefore, the total void volume of the electrode group obtained by separately performing the mercury porosimetry measurements of the respective components of the electrode group and that obtained by performing the mercury porosimetry measurement of the electrode group after the formation of the electrode group do not agree with each other in the strict sense. However, there is no substantial difference between them.

For example, the total void volume of the electrode group is calculated as follows in concrete.

(i) The void volume per weight (cc/g) of each component of the electrode group is obtained by a mercury porosimetry measurement. Here, it is preferred to regard pores with a pore size of 0.01 to 10 µm as voids. Even when too large pores are unevenly distributed in the electrodes, their effect on the swell of the polymer material is small, and too small pores do not need to be regarded as voids because the nonaqueous electrolyte can hardly enter such too small pores.

As the measuring device that can be used here, for example, SHIMADZU AutoPore 9220 (available from SHIMADZU CORPORATION) is given.

(ii) The total void volume V (cc) of the electrode group is calculated from equation (1):

$$V = v_1 \cdot w_1 + v_2 \cdot w_2 + v_3 \cdot w_3 \qquad (1)$$

wherein $v_1$, $v_2$ and $v_3$ represent the void volumes per weight (cc/g)of the positive electrode, negative electrode and separator, respectively, and $w_1$, $w_2$ and $w_3$ represent the their weights (g), respectively.

Further, the amount W (g) of the nonaqueous electrolyte filling X% of the total void volume V (cc) of the obtained electrode group is given by equation (2):

$$W = D \cdot V \cdot X/100 \qquad (2)$$

wherein D is the specific gravity of the nonaqueous electrolyte.

Additionally, the total void volume of the electrode group can be obtained by calculation if the true density of the members used for the respective components, the weight ratio of each component to the whole electrode group, the weight and volume of each component and the weight and volume of the whole electrode group are known. Besides, it has been confirmed that substantially the same values are given for the total void volume of the electrode group by any of the methods.

Next, typical examples of the positive electrode, negative electrode and separator will be explained. It should be noted that the present invention is characterized by optimizing the amount of the nonaqueous electrolyte, and the effects of the present inventions can never be lost depending on the kinds of the positive electrode and negative electrode active materials, the kind of the nonaqueous electrolyte, the kind of the polymer material, etc. Furthermore, the present invention is applicable to the whole lithium polymer secondary batteries produced by storing their electrode group in the battery case and then pouring the nonaqueous electrolyte to swell the polymer material in the electrode group.

The positive electrode of the lithium polymer secondary battery of the present invention contains a lithium-containing composite oxide and a polymer material capable of being gelled. As the content ratio of them, 5 to 30 parts by weight of the polymer material is preferably contained per 100 parts by weight of the lithium-containing composite oxide.

Here, as the lithium-containing composite oxide, $LiCoO_2$, $LiNiO_2$, $LiMn_2O_4$, $LiV_3O_8$, etc. are preferably used. They may be used alone, or two or more kinds thereof may be used in combination.

As the polymer material, polyvinylidene fluoride or a copolymer having vinylidene fluoride unit can be preferably employed. In concrete, vinylidene fluoride-hexafluoropropylene copolymer and the like are exemplified. They may be used alone, or two or more kinds thereof may be used in combination.

Besides, as the polymer material, a polymer of monomer unit having an acrylate group or methacrylate group at a terminal end of a polyalkylene oxide group, or a copolymer having the above monomer unit may also be preferably used. They may be used alone, or two or more kinds thereof may be used in combination.

More specifically, examples of the polyalkylene oxide group include a polyethylene oxide group and polypropylene oxide group, etc. They may be used alone, or two or more kinds thereof may be used in combination. In addition, the polyalkylene oxide group may have a branched structure.

Further, by reacting the terminal OH group of the polyalkylene oxide with an acrylic ester or methacrylic ester for esterification, a desired monomer can be obtained. For the esterification, one kind of acrylate or methacrylate may be used alone, or two or more kinds thereof may be used in combination.

The positive electrode is usually obtained by applying a positive electrode mixture in the form of paste to a positive electrode collector such as an aluminum foil, drying and rolling it and then cutting it into a predetermined size.

As the positive electrode mixture, for example, it is possible to use a mixture of a lithium-containing composite oxide as the positive electrode active material, carbon black as the conductive agent, and N-methyl-2-pyrrolidone solution of vinylidene fluoride-hexafluoropropylene copolymer as the polymer material. Besides, a mixed solvent of acetone and N-methyl-2-pyrrolidone may be used as well as N-methyl-2-pyrrolidone. Further, dibutyl phthalate may be added to the mixture as a plasticizer.

The negative electrode of the lithium polymer secondary battery of the present invention contains a material capable of reversibly absorbing and desorbing lithium, and a polymer material. As the content ratio of them, 5 to 30 parts by weight of the polymer material is preferably contained per 100 parts by weight of the material capable of reversibly absorbing and desorbing lithium.

Here, as the material capable of reversibly absorbing and desorbing lithium, it is preferred to use carbon materials, such as natural graphite, artificial graphite and graphitized carbon fibers; alloys and oxides containing elements such as Si, Sn, Al, B, Ge, P and Pb; and nitrides such as $Li_3N$ and $Li_{3-x}Co_xN$. They may be used alone, or two or more kinds thereof may be used in combination. Further, the same kind of polymer material as that used for the positive electrode is preferably used.

The negative electrode is usually obtained by applying a negative electrode mixture in the form of paste to a negative electrode collector such as a copper foil, drying and rolling it and then cutting it into a predetermined size.

As the negative electrode mixture, for example, it is possible to use a mixture of spherical graphite as the negative electrode active material and N-methyl-2-pyrrolidone solution of vinylidene fluoride-hexafluoropropylene copolymer as the polymer material. Besides, a mixed solvent of acetone and N-methyl-2-pyrrolidone may be used as well as N-methyl-2-pyrrolidone alone. Further, dibutyl phthalate may be added to the mixture as a plasticizer.

The separator of the lithium polymer secondary battery of the present invention contains an inorganic or organic filler and a polymer material. As the content ratio of them, 20 to 250 parts by weight of the polymer material is preferably contained per 100 parts by weight of the inorganic or organic filler.

Besides, when the battery as shown in FIG. 1 is to be obtained, the positive electrode mixture is applied to only one side of the positive electrode collector, but the negative electrode mixture is applied to both sides of the negative electrode collector.

Here, fine particles of silicon dioxide or the like are preferably used as the inorganic filler, and polypropylene staple fibers, polystyrene beads, etc. are preferably used as the organic filler. They may be used alone, or two or more kinds thereof may be used in combination. Further, silicon dioxide treated to have a hydrophobic property is preferred.

In addition, the same kind of polymer material as that used for the positive electrode is preferably used for the separator.

Like the positive electrode mixture and negative electrode mixture, the separator is obtained by dispersing fine particles of silicon dioxide into an N-methyl-2-pyrrolidone solution or the like of the polymer material to form a paste, applying this paste to a glass plate or polyethylene terephthalate film, drying and rolling it and then cutting it into a predetermined size. Besides, a mixed solvent of acetone and N-methyl-2-pyrrolidone may be used as well as N-methyl-2-pyrrolidone alone. Further, dibutyl phthalate may be added to the dispersion as a plasticizer.

The electrode group is obtained by first sandwiching both sides of the negative electrode having the negative electrode mixture applied to both surfaces of the collector with the separators and then with the positive electrodes and bonding them together by compression while heating. In the case where dibutyl phthalate as the plasticizer is added to the mixture, after extracting the dibutyl phthalate from the electrode group by using a solvent such as diethyl ether, the electrode group is dried in vacuo to remove the solvent. Then, after storing the electrode group in the battery case and pouring the electrolyte from the opening section of the case, the opening portions are heat-welded to obtain a flat type lithium polymer secondary battery.

Further, in the present invention, the form of the electrode group is not limited, and, for example, folded type electrode group or wound type electrode group may be employed as well as the flat type electrode group as described above. In addition, the present invention may be applied to cylindrical batteries and coin type batteries as well as flat type batteries.

The following description will explain the lithium polymer secondary battery of the present invention in detail with reference to some examples thereof, but the present invention is not limited only to these examples.

EXAMPLE 1

A flat type lithium polymer secondary battery as shown in FIG. 1 was produced using lithium-cobalt composite oxide ($LiCoO_2$) as the positive electrode active material and spherical graphite as the negative electrode active material.

The positive electrode mixture was obtained by mixing $LiCoO_2$ as the active material and acetylene black as the conductor in a weight ratio of 90:10 to obtain a mixture in first and, then, by mixing the obtained mixture, vinylidene fluoride-hexafluoropropylene copolymer as the polymer material, dibutyl phthalate and N-methyl-2-pyrrolidone in a weight ratio of 8:2:1:9. This positive electrode mixture was applied to one side of an aluminum foil collector, dried, rolled and then cut to obtain a positive electrode.

The negative electrode mixture was obtained by mixing a powder of spherical graphite, polymer material of the same kind as above, dibutyl phthalate and N-methyl-2-pyrrolidone in a weight ratio of 8:2:1:9. This negative electrode mixture was applied to both sides of a copper foil collector, dried, rolled and then cut to obtain a negative electrode.

A separator was obtained by mixing a fine powder of silicon dioxide treated to have a hydrophobic property, polymer material of the same kind as above, dibutyl phthalate and N-methyl-2-pyrrolidone in a weight ratio of 1:2:2:3, applying this mixture to a glass plate, drying, rolling and then cutting it.

The obtained negative electrode is first sandwiched with the separators and then with the positive electrodes and bonded together while applying heat and pressure, and then electrode leads were connected to the positive and negative electrodes to obtain the electrode group. Subsequently, the dibutyl phthalate was extracted from the electrode group by using diethyl ether as a solvent and then the electrode group was dried in vacuo at 80°C to remove the solvent and water.

Meanwhile, the same positive and negative electrodes and separators as above were prepared, dibutyl phthalate was extracted from each of them independently by using diethyl ether as a solvent, and then they were dried in vacuo at 80°C to remove the solvent and water. Accordingly, samples for void volume measurement were prepared.

These samples were subjected to mercury porosimetry measurement using SHIMADZU AutoPore 9220, and the void volume of a pore size of 0.01 to 10 μm per weight (cc/g) of each sample was measured. From this void volume (c/g) and the weight of the positive and negative electrodes and separators constituting the electrode group, the total void volume (cc) of the electrode group was calculated.

As the nonaqueous electrolyte, one obtained by dissolving $LiPF_6$ as the electrolyte in a mixed solvent obtained by mixing ethylene carbonate and ethylmethyl carbonate in a volume ratio of 1:3 so that the concentration of $LiPF_6$ was 1.5 mol/dm$^3$ was used. The specific gravity of this nonaqueous electrolyte was 1.23. It is possible to calculate the ratio of the void volume of the electrode group filled with the nonaqueous electrolyte from the specific gravity and poured amount of the nonaqueous electrolyte and the void volume of the electrode group.

After the dried electrode group was stored in a battery case made of an aluminum/resin laminate film and a predetermined amount of the nonaqueous electrolyte was poured, the opening portions of the battery case were sealed by melting and adhering the resin by heating while evacuating, so that a lithium polymer secondary battery was obtained.

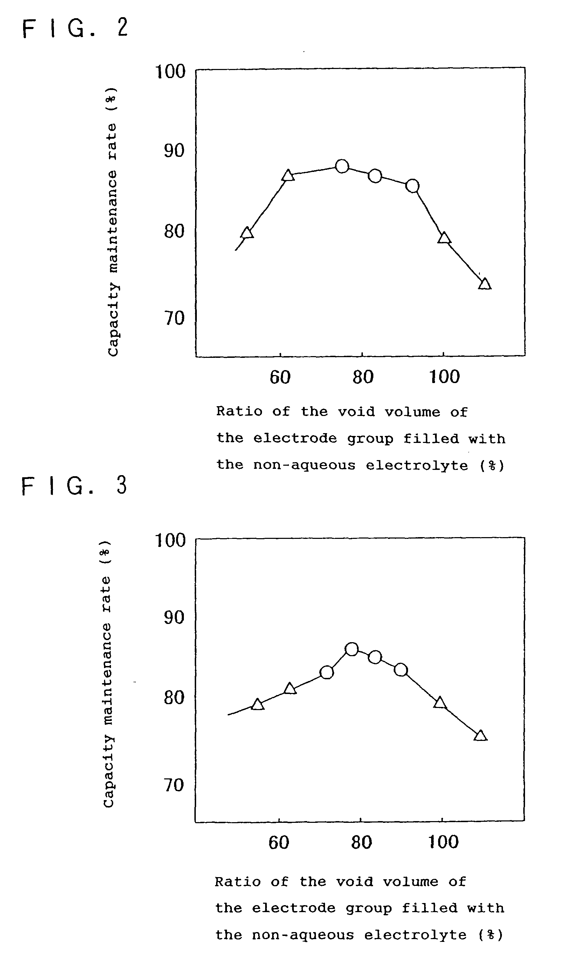

The relation between the ratio of the void volume of the electrode group filled with the nonaqueous electrolyte and the capacity maintenance rate was examined by changing the poured amount of the nonaqueous electrolyte. The results are shown in FIG. 2. In FIG. 2, ○ represents the examples of the present invention, and Δ corresponds to the comparative examples.

The capacity maintenance rate is the rate (%) of the capacity retained after 100 cycles of charging and discharging to the initial capacity. The charging and discharging was repeatedly carried out at 20°C under the conditions of a charging final voltage of 4.2 V and a discharging final voltage of 3.0 V at a constant current of one hour rate, which completes the charging or discharging in one hour.

In FIG. 2, it seems that there is no difference in the capacity maintenance rate between the case where the ratio of the void volume of the electrode group filled with the nonaqueous electrolyte is 75% and the case where the ratio is 62%. However, when the ratio is 62%, the utilization ratio to the designed battery capacity is around 70%, and thus the serviceability is low. In order to increase the utilization ratio to the designed battery capacity to 95% or more, the ratio of the void volume of the electrode group filled with the nonaqueous electrolyte needs to be 70% or more.

On the other hand, when this ratio exceeds 90%, deterioration of the charge/discharge cycle characteristics is increased. Moreover, there is a possibility of leakage of the electrolyte.

EXAMPLE 2

First, dimethacrylate based monomer having a polyethylene oxide group as a principal chain and a methacrylate group at both terminal ends represented by:

$$CH_2=C(CH_3)-CO-O-(CH_2-CH_2-O)_n -CH_2-CH_2-O-CO-C(CH_3)=CH_2$$

,wherein n = 20 to 60, and 2,2'-azobisisobutylnitrile as the polymerization initiator therefor were mixed in a weight ratio of 100:0.5 to prepare a polymer material precursor capable of being gelled.

The positive electrode mixture was obtained by dispersing 10g of a mixture produced by mixing $LiCoO_2$ as the active material and acetylene black as the conductor in a weight ratio of 90:10, into 10g of a solution obtained by mixing the polymer material precursor and N-methyl-2-pyrrolidone in a weight ratio of 2:8. This positive electrode mixture was applied to one side of the aluminum foil collector, heated at 70°C under a reduced pressure to cure (partially polymerize) the polymer material precursor, and then the solvent was removed, and a positive electrode was obtained by cutting.

The negative electrode mixture was obtained by mixing the spherical graphite powder, polymer material precursor and N-methyl-2-pyrrolidone in a weight ratio of 10:2:8. This negative electrode mixture was applied to both sides of the copper foil collector, heated at 70°C under a reduced pressure to cure (partially polymerize) the polymer material precursor, and then the solvent was removed, and a negative electrode was obtained by cutting.

The separator was obtained by applying 20 g of the above polymer material precursor for each 1 $m^2$ of polypropylene non-woven fabric having an amount of fiber per unit area is 15 $g/m^2$, heating it at 70°C under a reduced pressure to cure (partially polymerize) the polymer material precursor, and then removing the solvent, rolling and cutting it.

The obtained positive electrode, negative electrode and separator were subjected to a heat treatment at 90°C and, then, assembled to obtain an electrode group in the same manner as in Example 1.

In other words, in this example, after applying the electrode mixture containing the solvent to the collector, the polymer material precursor in the mixture was polymerized to form the polymer material.

Then, in the same manner as in Example 1, samples for void measurement of the positive electrode, negative electrode and separator were prepared to measure the respective void volumes, and then the total void volume of the electrode group was calculated.

As the nonaqueous electrolyte, one obtained by dissolving lithium·bispentafluoroethyl sulphonamide (Li$(C_2F_5SO_2)_2$N) as the electrolyte in a mixed solvent obtained by mixing ethylene carbonate and diethyl carbonate in a volume ratio of 1:3 so that the concentration of Li$(C_2F_5SO_2)_2$N) was 1 mol/$dm^3$ was used.

Like Example 1, the relation between the ratio of the void volume of the electrode group filled with the nonaqueous electrolyte and the capacity maintenance rate was examined by changing the poured amount of the nonaqueous electrolyte. The results are shown in FIG. 3. In FIG. 3, ○ represents the examples of the present invention, and Δ corresponds to the comparative examples.

FIG. 3 shows that the present invention is also effective for a lithium polymer secondary battery produced by polymerizing the polymer material precursor in the electrode mixtures after applying the electrode mixtures containing a solvent to the collectors. Moreover, FIG. 3 shows that especially excellent charge/discharge cycle characteristics are obtained when the ratio of the void volume of the electrode group filled with the nonaqueous electrolyte is between 75 and 85%.

According to the present invention, it is possible to prevent a change in the volume of the electrode group and localization of the nonaqueous electrolyte during charge/discharge cycles, thereby providing highly reliable lithium polymer secondary batteries with excellent charge/discharge cycle characteristics.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

To obtain highly reliable lithium polymer secondary batteries with charge/discharge cycle characteristics equivalent to those of lithium ion secondary batteries, 70 to 90% of the total void volume of an electrode group formed by laminating the positive electrode, negative electrode and separator is filled with a nonaqueous electrolyte.

## Claims

1. A lithium polymer secondary battery comprising: an electrode group formed by laminating a positive electrode made of a lithium-containing composite oxide, a negative electrode made of a material capable of reversibly absorbing and desorbing lithium, and a separator containing an inorganic or organic filler; and a polymer electrolyte made of a nonaqueous electrolyte and a polymer material contained in said positive electrode, negative electrode and separator;

   wherein 70 to 90% of a total void volume of said electrode group is filled with said nonaqueous electrolyte.

2. The lithium polymer secondary battery in accordance with claim 1, wherein said polymer material is polyvinylidene fluoride or a copolymer having vinylidene fluoride unit.

3. The lithium polymer secondary battery in accordance with claim 1, wherein said polymer material is a polymer of monomer unit having an acrylate group or methacrylate group at a terminal end of a polyalkylene oxide group, or a copolymer having said monomer unit.

F I G. 1

F I G. 2

F I G. 3